# EUROPEAN PATENT SPECIFICATION

(11) **EP 0 929 231 B1**
(45) Date of publication and mention of the grant of the patent: **26.06.2002**
(21) Application number: 97941521.3
(22) Date of filing: 11.09.1997
(51) Int. Cl.: A23J 3/14, A23J 3/16, A23L 1/015

(54) **PROCESS FOR TREATING PLANT PROTEINS AND NUTRITIONAL PRODUCTS MADE THEREFROM**
VERFHAREN ZUR BEHANDLUNG VON PLANZLICHEM PROTEIN UND DARAUS HERGESTELLTE ERNÄHRUNGSPRODUKTE
PROCEDE DE TRAITEMENT DES PROTEINES VEGETALES ET PRODUITS ALIMENTAIRES FABRIQUES SUR CETTE BASE

(30) Priority: 13.09.1996 US 713904; 13.09.1996 US 710236
(43) Date of publication of application: 21.07.1999
(73) Proprietor: Abbott Laboratories, Abbott Park, Illinois 60064-3500 (US)
(72) Inventor: SUH, John D., Gahanna, OH 43230 (US); OSTROM, Karin M., Reynoldsburg, OH 43068 (US); NDIFE, Louis I., Columbus, OH 43229 (US); ANALOAGUE, Paul S., Reynoldsburg, OH 43068 (US); CHURMA, James N., Canal Winchester, OH 43110 (US); DAAB-KRZYKOWSKI, Andre, Columbus, OH 43214 (US); JOHNS, Paul W., Columbus, OH 43221 (US); GARCIA, Diane M., Westerville, OH 43081 (US); MAZER, Terrence B., Reynoldsburg, OH 43068 (US); MEI, Fu-I, Columbus, OH 43202 (US)
(74) Representative: Modiano, Guido, Dr.-Ing.
(86) International application number: US9716081
(87) International publication number: WO9810665

(56) References cited:
- EP-A- 0 575 121
- US-A- 5 248 804
- PATENT ABSTRACTS OF JAPAN vol. 095, no. 001, 28 February 1995 & JP 06 276955 A (SNOW BRAND MILK PROD CO LTD), 4 October 1994,
- HOW J.S.L AND MORR C.V.: "Removal of Phenolic Compounds from Soy Protein Extracts Using Activated Carbon" JOURNAL OF FOOD SCIENCE, vol. 47, 1982, page 933-940 XP002050684 cited in the application
- DATABASE FSTA, 80-1-06-G0409, 1980, XP002051365 & REVUE FRANÇAISE DES CORPS GRAS, vol. 26, no. 10, 1979, page 441-446
- BARNES S. ET AL.: "Isoflavones and their conjugates in soy foods: Extraction conditions and analysis by HPLC-Mass spectrometry" JOURNAL OF AGRICULTURAL AND FOOD CHEMISTRY, vol. 42, 1994, page 2466-2474 XP000474641
- HUANG A-S. ET AL.: "Characterization of the nonvolatile minor constituents responsible for the objectionable taste of defatted soybean flour" JOURNAL OF FOOD SCIENCE, vol. 47, 1981, page 19-23 XP002051366

## Description

The present invention relates generally to a process of treating plant proteins for use in nutritional products. The process utilizes ion exchange technology to remove phytoestrogens (also known as "isoflavones"), manganese, nucleotides, nucleosides and RNA from plant proteins, to produce a plant protein product having reduced levels of phytoestrogens, manganese and nucleic acids. The invention is also directed to nutritional products that use soy protein as the plant protein product as a source of amino nitrogen. The same process may also be used to extract phytoestrogens from plant materials.

### Background

Phytoestrogens or plant estrogens occur in a variety of plants, including vegetable protein materials such as those derived from soybeans. Phytoestrogens are defined as plant substances that are structurally and functionally similar to the gonadal steroid 17 β-estradiol or that produce estrogenic effects. There are three main groups of nonsteroidial dietary estrogens which are 1) the isoflavones, 2) the coumestans and 3) the mycoestrogens (fungal). The structural similarity between these substances and the endogenous mammalian estrogens have been studied. A review of phytoestrogens and their effects in mammals is reported by Kaldas and Hughes in an article entitled, "Reproductive and General Metabolic Effects of Phytoestrogens in Mammals", Reproductive Toxicology, Vol. 3, pp. 81-89, 1989. The teachings of this article are public domain and need not be repeated here. As used in this specification and the appended claims, the term "isoflavones" is equivalent to the term "phytoestrogens" as that term is defined and used in the art (e.g. the Kaldas et al. article).

Flavonoids and isoflavones are produced by numerous leguminosoe and grasses, including many plants commonly consumed by man and livestock. Soy isoflavones include compounds such as daidzin, genistin, daidzein and genistein. A general structural formula for these compounds is:

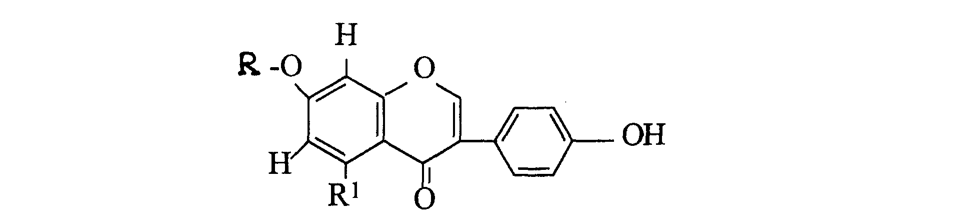

| Compound | R | R1 |
|---|---|---|
| daidzein | H | H |
| genistein | H | OH |
| daidzin | G | H |
| genistin | G | OH |
| wherein G = glucosyl | | |

It has recently been recognized that isoflavones contained in vegetable proteins may have a detrimental impact upon the mammals that consume the vegetable protein, see Kaldas et al., *supra.* The concentration of isoflavones in plant protein isolates or concentrates such as soy protein isolates, can be as high as 3,000 µg/g of protein. Isoflavones also provide the bitter or "beany" taste to vegetable proteins, (see Ewan et al. *infra*) may reduce the bioavailability of essential minerals and may influence the nutritional value of proteins (see Kaldas et al., *supra*).

The consumption of isoflavones by man and livestock has also been connected with compromised reproductive systems in mammals. There is some concern that consumption of current soy based infant formulas that contain soy isoflavones may have an undesired physiological impact on the developing neuro-endocrine system of the infant. This concern is based in part, on evidence that soy-based animal feed may cause fertility problems in cheetahs. Setchell et al., 1987: "Gastroenterology" 93:225-33.

By contrast, it has also been suggested that isoflavones may have positive pharmaceutical-like effects in some cases. Estrogens have two opposing effects on cancer, depending on dosage. Large doses inhibit breast cancer tumor development, while small doses seem to promote tumor growth. This duality extends to phytoestrogens or isoflavones. Isoflavones may stimulate or inhibit tumor growth. Setchell KDR, and Welch, MB J. Chrom. 386 (1987) 315-323; "Naturally Occurring Non-Steroidial Estrogens of Dietary Origin." In McLachlan J.A., ed. "Estrogens in the Environment", New York: Elsevier Press; 1985: 69-85 and Setchell, et al., "Nonsteroidial Estrogens of Dietary Origin: Possible Roles in Hormone-Dependent Disease", Am J. Clin. Nutr. 1984; 40: 569- 578. One mechanism by which isoflavones may manifest their anti-tumor effect is blockage of estrogen receptors and uncoupling of receptor mediated response. Thus, the ability of endogenous estrogens to support tumor growth would be reduced. There is also indirect, demographic support for an isoflavone mediated reduction in cancers of hormone responsive tissues from the observation that women in countries consuming vegetarian diets have a lower incidence of breast cancer compared to meat-eating countries. Adlercreutrz et al., "Determination of Urinary Lignans and Phytoestrogen Metabolites, Potential Antiestrogens and Anticarcinogens, in Urine of Women on Various Habitual Diets" Steroid Biochem. 1986; 25: 791-797.

Isoflavones may also have antiviral and fungicidal properties. Isoflavones have also been implicated in the reduction of serum cholesterol levels in humans, positive immunological effects and activity as an antioxidant. A final beneficial isoflavone effect is alleviation of vasomotor symptoms in menopausal women. Historically, the Chinese have used herbal medicine to treat "hot flashes". Thus, a process that facilely isolates and concentrates the isoflavones from plant material would be of value to the scientific community and the pharmaceutical industry.

The presence of high levels of manganese in body tissues has been suspected in the development of criminal behavior. See Gottschalk et al., "Abnormalities in Hair Trace Elements as Indicators of Aberrant Behavior", Compr Psychiatry 1991; 32:229-237, and Scientific American, March, 1995 pp. 104-105. Furthermore, there have also been reports that learning disabilities in children may be associated with increased levels of manganese in hair as reported by Collipp et al., in an article entitled, "Manganese in Infant Formula and Learning Disabilities", Ann. Nutritional Metals, 27:488-494, 1983. Typical plant protein isolates contain up to 1000 µg of manganese per gram of protein. Thus, there is a need for improved processes that economically and on a commercial scale, provide for the reduction of isoflavone and manganese content in plant protein.

The use of nucleotides and nucleosides (or nucleotide equivalents as defined below) in nutritional formulas has received much attention in the last few years. It has been suggested that certain levels and ratios of the various nucleic acids can have a positive impact on the mammalian immune system and even prevent certain maladies such as diarrhea. The problem with using plant protein in such nutritional formulas is that the plant protein contains typically very high, inherent level of nucleic acids that may not be in the most useful form (e.g., as RNA) or may not be at the most desirable ratios. Further, the high level of variation in the nucleic acid content causes problems in commercial manufacture. Typical plant protein isolates contain up to about 15 mg of nucleotide equivalents per gram of protein. Thus, the nutritional industry desires a source of plant protein that has substantially reduced levels of inherent nucleic acids.

Ion-exchange technology has been known for a great number of years. Ion-exchange resins are typically synthetic, insoluble, cross-linked polymers carrying acidic or basic side groups. They have high exchange capacities and can be used for an almost unlimited number of reactions. Ion-exchange resins are used in water-treatment, extraction, separation, analysis and catalysis.

Ion-exchange resins have an extended, open molecular framework that includes electrically charged ionic groups. A cation exchanger exchanges positive ions and therefore has negative ions built into its framework. An anion exchanger has positive ions in its framework. The ions of the lattice are called the fixed ions; the smaller ions of opposite charge that can change places with ions in the solution are called counterions.

Common problems encountered with ion exchange processes conducted on proteins include poor protein recovery (i.e., protein adhered to the resin) and inability of the protein slurry to pass through the resin bed resulting in a high pressure drop across the resin bed. The process which is disclosed herein fulfills the need in the nutritional industry for an economical and commercially viable process which cleanly separates isoflavones from plant protein, leaving an economic source of isoflavones as well as a high yield of a plant protein product that has highly reduced levels of isoflavones, manganese and nucleotides.

U.S. Patent No. 5,352,384 to Shen discloses a process to produce an isoflavone enriched vegetable protein fiber. This patent discloses the use of a glucosidase to convert the glucone isoflavones (i.e., daidzen) in a protein slurry to the aglucone isoflavones. The fiber fraction is then recovered from the slurry by centrifugation to provide an aglucone enriched fiber.

An article by Ewan et al. in the Journal of Food Science, Vol. 57, No. 2, 1992 entitled: "Isoflavone Aglucones and Volatile Organic Compounds in Soybeans; Effects of Soaking Treatments", discloses the beneficial effects of soaking soybeans in mildly alkaline NaHCO₃ solutions at elevated temperatures, for manufacturing soymilk with improved flavor. This publication does not suggest or disclose the use of an ion-exchange resin to remove isoflavones, manganese and nucleic acids from plant protein.

In an article published in volume 47 (1982) of the Journal of Food Science, pp. 933-940, by J. How and C. Morr entitled "Removal of Phenolic Compounds from Soy Protein Extracts Using Activated Carbon", they report subjecting soy protein extracts to activated carbon and ion exchange process treatments to remove phenolic compounds that have been reported as being responsible for adverse color and flavor characteristics of soy protein products. Protein extracts were subjected to a two stage, sequential ion exchange treatment prior to protein precipitation. The protein extract was pumped "down-flow" through a cation exchange column in the Na+ form and then an anion exchanger in the hydroxyl and chloride form to remove polyvalent anions including phenolic acids, phytate and others.

Patent Abstracts of Japan, vol. 095, no. 001, 28 February 1995 (JP-A-06276955) discloses a process for deodorizing soybean protein comprising contacting a solution containing a soybean protein with a synthetic adsorption resin such as a weakly basic anion exchange resin.

U.S. Patent No. 5,248,804 to Nardelli et al. discloses a process for the removal of phytate from plant protein using ion-exchange resins. The process uses a macroporous anion exchange resin (weak base or strong base) which has been conditioned by 1) conversion to the hydroxide form; 2) conversion to the chloride or sulfate form; and 3) thereafter conversion of the strong base sites to the carbonate form and the weak base sites to the free base form. The plant protein containing phytate is then contacted with the treated resin to remove the phytate.

Phytate comprises the salts of phytic acid. Phytic acid is also known as inositol hexaphosphate. Thus, in using an anion exchange resin, the highly anionic phosphate groups provide the handle by which the resin can extract the phytate from the protein slurry. In contrast, isoflavones and nucleotides are neutral molecules and would not be expected to attach to the resin or exchange with the anions on the resin.

U.S. Patent 5,492,899 to Masor et al. discloses an infant formula with ribonucleotides. This patent teaches the use of certain levels and ratios of nucleotide equivalents in infant formulas and discloses an analytical technique to identify and quantify the nucleotide equivalents in a nutritional matrix. As used herein and in the claims of this invention, the term "nucleotide" is the same as the term "nucleotide equivalent" as defined in U.S. 5,492,899. U.S. 5,492,899 defines nucleotide equivalents as polymeric RNA, ribo- nucleosides, ribo-nucleosides containing adducts and mono-, di- and triphosphate ribonucleotides.

### Summary of the invention

The present invention comprises a process by which low isoflavone, low manganese and/or low nucleotide plant proteins can be manufactured. The invention further comprises the low isoflavone, low manganese and low nucleotide soy protein isolates themselves, and such soy protein isolates as are produced according to the process of the present invention. The present invention further comprises nutritional products made with the soy protein isolates produced in accordance with the invention. One additional benefit to the process of this invention is that, not only can the isoflavones and manganese be removed by the ion exchange column but also a substantial portion of the inherent nucleic acids. An additional aspect of the invention is that the isoflavones themselves can be isolated by additional treatment of the exchange resin with an isoflavone release agent. These, and other aspects of the invention are specifically described in detail in the description set forth below.

Thus, in a first broad aspect, the invention provides a process for treating a plant protein comprising: a) providing a slurry of plant protein that contains isoflavones, manganese or nucleotides; b) providing at least one anion exchange resin capable of binding isoflavones, manganese or nucleotides present in said protein slurry; c) contacting said slurry with said anion exchange resin; and d) separating said slurry from said anion exchange resin whereby said plant protein slurry has a reduced content of isoflavones, manganese or nucleotides.

In a preferred embodiment, the exchange resin is pre-conditioned by exposing the resin prior to the contacting of step c) to an agent that places on the resin an exchangeable anion that: i) does not change the pH of contacted protein slurry outside the range of 6.0 to 9.5; and ii) does not add an objectionable anion to the contacted protein slurry at step d). More specifically, a resin having strong base sites and weak base sites can be pre-conditioned by subjecting it to the steps of:
i) conversion to a hydroxide form;
ii) conversion to a chloride or sulfate form; and
iii) conversion of at least some of said strong base sites to the carbonate form and at least some of said weak base sites to the free base form.
Thus, agents useful for this pre-conditioning include sodium hydroxide and potassium hydroxide for step i); hydrochloric acid, sulfuric acid and sodium chloride for step ii); and sodium carbonate, sodium bicarbonate and ammonium hydroxide for step iii).

The contacting step may comprise placing the anion exchange resin in the slurry; or, alternatively, passing the slurry through a structure (such as a vertical column) which contains the anion exchange resin and has at least one inlet and one outlet. Preferably, the inlet is located lower than the outlet in such a vertical column.

The process may optionally comprise further steps of reconditioning the exchange resin using steps similar to those described above, and reusing the resin for additional separation. Other optional steps include heat treatments of the protein and/or hydrolysis of the protein prior to contact with the exchange resin.

Another optional further step involves treating the exchange resin with at least one isoflavone release agent; and separating the isoflavone release agent containing isoflavones from said anion exchange resin and collecting said isoflavones. Representative isoflavone release agents include, for example, aqueous solutions of acids (e.g. HCl), aqueous solutions of bases (e.g. NaOH or KOH), alcohols (e.g. methanol or ethanol), alcohol/water mixtures, organic solvents and mixtures thereof.

The present invention also relates to a soy protein composition that has a reduced content of at least one isoflavone, manganese or nucleotide component selected from the group consisting of:
(i) less than 30 µg of isoflavones per gram of protein;
(ii) less than 450 µg of manganese per gram of protein; and
(iii) less than 10 mg of nucleotides per gram of protein.
Such a soy protein may, but need not necessarily, be made by the present process since heretofore there has been no soy protein extract having levels of phytoestrogens as low as those of the present invention. More preferably, the soy protein composition comprises less than 20 µg of isoflavone per gm of protein; and less than 400 µg of manganese per gm of protein. The soy protein composition according to the invention may be utilized to prepare livestock feeds, infant formulas, and nutritional products. Infant formulas according to the invention contain less than 600 µg of isoflavones per liter of ready-to-feed formula, more preferably less than 200 µg and most preferably less than 100 µg.

### Detailed Description

Typically, the process of this invention is conducted by placing the anion exchange resin in a bed, column or reactor through which the protein slurry is passed. The bed, column or reactor has at least one inlet and at least one outlet and is preferably operated as a vertical column in the "upflow" mode. In another embodiment, the preconditioned resin may be added to a tank containing the protein slurry and after an appropriate period of time for the reaction to take place, the resin containing the entrapped isoflavone is filtered from the slurry.

The anion exchange resin is typically a macroporous resin and is preferably a Type I or II macroporous resin. In a preferred embodiment, the anion exchange resin is selected from weak base anion exchange resins, strong base anion exchange resins and mixtures thereof. Representative of the anion exchange resins useful in the present invention include Amberlite® RA95, IRA-910 and IRA-900 sold by Rohm and Haas Company, Dowex™ -22 and MSA™ -1 sold by Dow Chemical and Purolite™ A510 and A500 sold by Purolite Company. As used herein and in the claims, the term resin is meant to include gels, which those skilled in the art would understand to be useful in the process described herein. Representative of such gels are Amberlite® IRA 410 (Type II gel, strong base anion) sold by Rohm and Haas Company, IRA 402 is a Type I strong base anion exchange gel that is not macroporous that would also be useful.

Representative counterions useful in the anion exchange resin according to this invention, include acetate, citrate, chloride, bisulfate, carbonate and bicarbonate. As most anion exchange resins are supplied in the chloride form, it is possible to use such chloride resins directly without pretreatment. As discussed below, a preferred procedure for resin pretreatment washes the chloride resin with caustic to clean the resin, then a HC1 wash is conducted to clean and control microbial growth and then the resin is converted to the carbonate and/or bicarbonate form.

In the production of plant protein using the process according to this invention, the anion that is released from the resin as a result of entrapping the isoflavone, manganese or nucleotide is important to the quality of the finished product. That is to say, the resulting protein should not be denatured, contain unacceptable levels of free hydroxyl groups or other offensive anions (i.e., chloride) that would produce a protein product that would be unacceptable for use in a nutritional product. For example, typical soy protein isolate contains sufficient levels of isoflavones, manganese and nucleotides that treatment with an anion exchange resin that has chloride as the counterion would produce a resulting protein that has excessive levels of chloride. In similar fashion, if the counterion is hydroxyl, the resulting product would need to be treated with acid to neutralize the basic product, thus unacceptably increasing the mineral load associated with the protein.

In one preferred embodiment of this invention, the anion exchange resin uses a counterion, such as carbonate or bicarbonate, which avoids the aforementioned problems. As used in the specification and in the appended claims, the term "carbonate" means carbonate and bicarbonate.

The proteins that may be used in the process of this invention include any plant protein that contains detectable levels of isoflavones, manganese and nucleotides. More specifically, the protein is obtainable from soybeans, corn, wheat, peas, beans, cottonseed, peanuts, carrots, alfalfa, apples, barley, bluegrass, clovers, coffee, garlic, hops, marijuana, oats, algae, orchard grass, parsley, rice, rye, sage, sesame, yeast, fungus, potatoes, hydrolyzates thereof and mixtures thereof.

It is preferred that the protein be a protein isolate or concentrate wherein the levels of fats, oils and carbohydrates have been reduced. It has been determined that the presence of fats and oils reduces the efficiency of the inventive process. When intact protein is not required in the final product, the inventive process may be used on protein hydrolysates and/or isolates as well.

Chemical agents useful in converting the resin to the hydroxide form include sodium hydroxide, calcium hydroxide, potassium hydroxide and magnesium hydroxide. The most preferred agent is sodium hydroxide.

Chemical agents useful in converting the resin to the chloride or sulfate form include hydrochloric acid, sulfuric acid and sodium chloride. The preferred agent is hydrochloric acid.

Chemical agents useful in converting the resin to the carbonate or free base form include any of the weak base salts such as sodium carbonate, sodium bicarbonate and ammonium hydroxide. Sodium bicarbonate is the most preferred agent for recovery of protein as it produces a protein effluent at a pH range of 6.6 - 9.5. For recovery of isoflavones, this is not crucial.

Those skilled in the art of ion exchange technology will appreciate that the protein slurry containing the isoflavones, manganese or nucleotides, as it is contacted with the anion exchange resin, should be at a pH that does not denature the protein, which causes clogging of the column. Further, adjustment of the pH past neutral, will add significant levels of anions to the slurry which will compete for counterion sites. Typically, a pH of from about 5.5 to 10 is satisfactory. Preferably, the pH of the protein slurry feed can range from 6.0 to 8.0. The pH of the protein slurry effluent (leaving the column or bed) should be near the pH at which the protein will be used in a final product. Thus, if a plant protein treated in accordance with this invention is to be used in an infant formula, the effluent pH should be about 6.0 to 7.5. In a preferred embodiment, the plant protein feed to the resin should be as free of added anions (i.e., -OH, Cl-, and the like) as possible. The addition of acids, bases, salts and the like to the protein slurry feed decreases the efficiency of the column to remove the isoflavones, manganese or nucleotides from the protein slurry.

As those skilled in the art will appreciate, exchange resins have a finite capacity and may be regenerated to an active state after exhaustion or near exhaustion. Thus, as contemplated in this invention, the exchange resins after contact with the plant protein is regenerated or reconditioned through known steps to the anionic form or more preferably through the steps comprising:
1) stripping the resin of any residue (i.e., protein) and conversion to the hydroxide form, for example through the use of sodium hydroxide;
2) conversion of the resin to the chloride or sulfate form; and
3) conversion of the strong base sites on the resin to the carbonate form and conversion of the weak base sites to the free base form.

Those skilled in the ion exchange resin art will appreciate that non-aqueous and alcohol water regenerations can be used.

One preferred embodiment of the process according to the present invention includes the step of homogenizing the plant protein slurry prior to contact with the resin. Homogenization or treatments similar thereto have been found in the process of this invention, to increase the effective removal of isoflavones, manganese and nucleotides from the slurry. In addition, homogenization of the protein slurry prior to contact with the resin reduces the pressure drop across the resin bed or column which facilitates the facile and economic production of a plant protein for use in nutritional products.

In some embodiments, the goal is to recover the isoflavone or phytoestrogen compounds seprated from the plant protein material. In this case, the resin is treated with an isoflavone release agent which causes the isoflavones to elute from the resin. Representative isoflavone release agents that are useful in the present invention include alcohols such as ethanol, methanol, propanol, pentanol and the like; organic solvents such as heptane, decane, cyclohexane, benzene, toluene and the like; water-based alkaline solutions such as NaOH, KOH, and ammonium hydroxide; and water-based acid solutions such as HCl and the like. In general, the isoflavone release agent must separate the isoflavone from the resin and solubilize the isoflavone. Those skilled in this art can readily determine appropriate isoflavone release agents without undue experimentation.

The present invention is also directed to a soy protein isolate that has specified levels of isoflavones and to a soy protein composition that has been subjected to the process disclosed herein and to a ready-to-feed infant formula that is made from such proteins. Such proteins can also be used to prepare animal feeds that are substantially free of isoflavones. More specifically, the present invention relates to a soy protein composition containing less than about 30 µg of isoflavones per gm of protein, less than 450 µg of manganese and less than about 10 mg of nucleotide equivalents per gram of protein. In a more preferred embodiment, the soy protein composition contains less than 20 µg isoflavone per gm of protein. In a most preferred embodiment, the soy protein composition contains less than 10 µg isoflavone per gm of protein, less than 5 mg of nucleotides per gm of protein and less than 200 µg of manganese per gm of protein.

The following Examples describe specific, but non-limiting, embodiments of the present invention. The features of the present invention which are believed to be novel are set forth with particularity in the appended claims and should be understood as to structure and manner of operation by the following detailed Examples.

### EXAMPLE 1: Process for Treating Plant Protein

The process according to the present invention was used to isolate isoflavones and to produce a total of 221 kg (487 lbs.) of low isoflavone, low manganese and low nucleotide content soy isolate powder that was used in the manufacture of an infant formula. A total of six (6) manufacturing runs were required to produce the required soy protein isolate. A substantial amount of experimentation was conducted on a 50 liter scale to result in the best mode, described herein.

The soy protein starting material used in this Example was obtained from Archer Daniels Midland, Inc. (ADM) of Decatur, IL in curd form. The curd or protein slurry was of the commercially available soy protein isolate product known as Ardex F®. In a typical commercial process, soy proteins are extracted at slightly alkaline pH from defatted soy flake or defatted soy flour. The protein fraction is then precipitated from the extract by adjusting the pH to the isoelectric point of the proteins (pH 3.8 to 6.0). As most of the proteins are insoluble at this pH, a curd forms and the protein curd can be separated from the soluble sugars, salts, etc., by centrifugation. To complete the purification, the protein curd is washed with water at least once at this isoelectric pH, then the protein is spray-dried either as is or after resuspension at a neutral pH. In the following experiments, ADM supplied the isoelectric curd at 10 to 14% total solids and at a pH of about 4.5.

The supplied soy curd was diluted to about 6.5% total solids with water and placed into steam jacketed kettles. Each batch of the protein-in-water slurries weighed about 908 kg (2000 lbs.). The slurry was then heated to about 49°C (120°F) and neutralized to a pH of 6.8 with NaOH. The slurry was then filtered through a 60 mesh strainer, UHTST (ultra high temperature short time) processed and homogenized. The UHTST steam injection was at 152°C (305°F) and held for 10 seconds. It was determined that UHTST treatment post anion exchange exposure produces a protein with undesirable organoleptic properties. The slurry was then cooled to 55°C (130°F) and homogenized at 6895 kPa (1000 psig). The slurry was then transferred to the ion exchange system.

One aspect of the present invention resides in the discovery that ultra high temperature short time (UHTST) treatments need to be conducted prior to contact of the slurry with the resin to prevent spoilage of the slurry during the extended processing times. The process is conducted at temperatures where rapid microbiological growth can occur. Representative of the UHTST conditions useful in the present invention are temperatures from 120°C (250°F) to 155°C (310°F) and times of 1 to 60 seconds. The lower temperatures are associated with the longer hold times. This UHTST treatment, prior to the slurry contacting with the resin, provides microbiological stability while minimizing nutrient degradation.

The ion exchange system comprised a stainless steel, rubber lined column having inlet and outlet ports and a height of 401 cm (13'2") and a diameter of 30.5 cm (12 inch). 70 liters of Amberlite® IRA-910 anion exchange resin from the Rohm and Haas Co. of Philadelphia, Pennsylvania was placed in the column. IRA-910 is a macroreticular strongly basic anion exchange resin. The basicity of this resin is derived from quaternary ammonium functionality with slightly lower basic strength than a Type 1 anion exchange resin. This resin is supplied in the chloride form and is approved by the United States Food and Drug Administration (FDA) (after condition cycling) for use in processing edible products.

Prior to contact with the protein curd, the resin was preconditioned. The resin was preconditioned through contact in an upflow mode with 6% by weight NaOH at a flow rate of 4.6 to 5.7 liters (1.2 to 1.5 gal) per minute for 30 minutes. The resin bed was then washed with deionized water for 10 to 15 minutes in the upflow mode. The resin was then contacted with 1.0% by weight HCl in a downflow mode at 16 liters per minute. The resin was then washed with deionized water in the downflow mode for about 30 minutes. 2.8 kgs (6.18 lbs) of sodium bicarbonate was added to about 196 liters (49 gals) of water and agitated to dissolve. This solution was then pumped to the column in a downflow mode at about 4 liters per minute. The bed was again rinsed with deionized water until the conductivity of the effluent was 300 µmhos or less. The resin bed was then backwashed to remove air and re- classify the resin. The resin bed was allowed to settle naturally and the water was drained from the column. The column was now ready for the service cycle after draining the water to the top of the resin bed.

The protein slurry was pumped upflow through the ion exchange column at a flow rate of 3.6 to 3.8 kgs (8 to 8.4 lbs.) per minute. The inlet temperature of the slurry was 55-60°C (130-140°F) and the contact time was about 20 minutes minimum. Protein slurry exiting the column was cooled, samples were taken and then spray dried using conventional techniques and equipment.

The column before the next batch was regenerated with 6% NaOH, 1% HCl and 1.5% NaHCO₃ (sodium bicarbonate) as described above for the initial preparation of the resin bed. All solutions were prepared with deionized water.

### Results

A total of six batches were manufactured to yield a total of about 221 kgs of ion exchanged soy isolate powder. Three (3) samples were taken at various times during the processing of each batch: 1) protein slurry fed to the ion exchange column; 2) effluent from the column; and 3) dried powder. The samples were analyzed for mineral profiles of sodium, potassium, phosphorus, chlorine, calcium, magnesium, manganese, aluminum and fluoride. The samples were also analyzed for isoflavones and nucleotides. In order to make comparisons between the liquids and the powders possible, the concentration of the powder was normalized to 6.5% total solids.

Mean levels and standard deviations for each analyte before and after ion exchange were calculated for the six runs. The results are set forth in Table I. Note that reduction is expressed as a positive value while a negative value represents an increase in analyte concentration.

**TABLE I:**

| Mineral Profile | |
|---|---|
| Mineral | Reduction % |
| Phosphorus | 73.3 ± 3.4 |
| Calcium | 16.5 ± 4.2 |
| Magnesium | 11.4 ± 5.1 |
| Sodium | -6.3 ± 3.9 |
| Potassium | -7 ± 21 |
| Manganese | 31 ± 10 |
| Aluminum | 6 ± 15 |
| Chloride | -270 ± 110 |
| Fluoride | 48 ± 29 |

The most significant reduction in concentration from the ion exchange treatment was observed in total phosphorus, flouride and manganese. The reduction in phosphorus is consistent with the teachings of U.S. 5,248,804 as a large portion of the phosphorus inherent in soy exists as a phytate salt. In contrast, the effluent showed a significant increase in chloride. This is consistent with the fact that HCl is one of the regenerants used after the caustic rinse and the strong base resin has some weak base sites.

The profiles of calcium, magnesium, manganese, fluoride and aluminum before and after treatment showed a decrease. Of this group, manganese showed a significant decrease (31 ± 10%). Surprisingly, when compared to the other multi-valent metals, aluminum (+3 charge) remained essentially unchanged. Further, the removal of calcium and magnesium can be explained as the adsorption or chelation with phytate.

The monovalent cations, sodium and potassium, were relatively unaffected by the ion exchange treatment (-6.3 ± 3.9% and -7 ± 21 %, respectively). The negative values actually indicate a slight uptake in both sodium and potassium. These data support the typical behavior of an anion exchange resin in that monovalent cations would not be exchanged or adsorbed by the anionic resin.

An important benefit of the instant inventive process is that high levels of protein are recovered from the treated plant protein isolates. This means that very little protein is lost in the resin column or bed. In these experiments, over 90% of the protein that entered the resin column was recovered in the effluent.

It is important to note that the overall efficiency of the process of this invention is improved when solubility and homogenity of the protein slurry is enhanced. Thus, the pre- filtration (through a 60 mesh filter) and homogenization greatly reduced the pressure drop across the column, which increased the efficiency of the inventive process. In comparison, the process without the pre-filtering and homogenization resulted in an initial pressure drop of about 138 kPa (20 psig) while the pre-filtering and homogenization resulted in an initial pressure drop of about 14 to 35 kPa (2-5 psig). After about 4 to 6 hours of operation without prefiltering and homogenization, the pressure drops of 276 to 414 kPa (40-60 psig) were experienced while with prefiltering and homogenization, pressure drops were about 55 to 83 kPa (8-12 psig).

The process of this invention was also very effective in removing nucleotides. The analytical procedures used are described in U.S. 5,492,899 to Masor et al. The removal of total potentially available nucleotides (TPAN) was found to be about 57.4 ±7.2%.

Isoflavones were almost completely removed by the present inventive process. Table II sets forth the specific isoflavones, the level of the feed slurry, level in the effluent and level in the powder.

**TABLE II**

| | | | | **REDUCTION %** | |
|---|---|---|---|---|---|
| **ISOFLAVONE** | **FEED µg/g*** | **EFFLUENT µg/g*** | **POWDER µg/g** | **FEED VS. POWDER** | **FEED VS. EFFLUENT** |
| Daidzin | 4.12±0.87 | 0.51 ±0.21 | 0.68±0.37 | 83.5±6.8 | 87.6 |
| Genistin | 10.0±2.8 | 0.82 ±0.55 | 0.87±0.72 | 91.4±5.9 | 91.8 |
| Daidzein | 3.9±6.5 | 0.10±0.0 | 0.10±0.0 | 97.4±4.3 | 97.4 |
| Genistein | 3.7±1.4 | 0.10±0.0 | 0.10±0.0 | 97.3±1.4 | 97.3 |

| | | | | | |
|---|---|---|---|---|---|
| *normalized to a 6.5 wt % solution | | | | | |

### EXAMPLE II : Isolation of Isoflavones - Alcohol Wash

In this experiment, isoflavones were isolated from soy curd using the previously described ion exchange resin and then rinsing or releasing the isoflavones from the resin with an alcohol/water solution. In a laboratory column, (80 liters) Amberlite® IRA-910 was pre- conditioned as described in Example I and the soy curd as described in Example I was passed over the column until phosphorus levels in the effluent approached breakthrough (i.e., levels of the feed). The column was rinsed with warm water (49°C) to remove entrapped protein and then with cool (19°C) water. A 50% by weight solution of ethanol and water was then pumped through the column at about 4 liters per minute in the downflow mode. The alcohol/water solution was recycled through the column for about 1 hour (3 bed volumes). During recycle, the alcohol content was diluted to about 5% through mixture with water in the column. About 100 liters of the isoflavone rich solution was recovered. The analytical procedure for isoflavone analysis is set forth in Example IV. The soy protein feed contained 2.7% by weight daidzin and 0.6% genistin. The solution from the column contained 850 µg/L daidzin and 380 µg/L genistin. Extraction can be improved by soaking the resin in the isoflavone release agent (i.e., alcohol solution) and by increasing the percentage of alcohol up to about 80% by weight. Increases in isoflavone yield would also be seen when the isoflavone release agent is warmed up to about 49°C.

### EXAMPLE III : Isolation of Isoflavones - Regeneration

In this experiment, the content of the regeneration effluent was analyzed. The procedure of Example I was followed except that during the regeneration of the resin at the NaOH treatment, a 240 gm (8 oz) sample was withdrawn. Analysis of this sample for isoflavones is set forth in Table III.

**TABLE III**

| Isoflavones from Regeneration | | | | |
|---|---|---|---|---|
| | **Daidzin** | **Genistin** | **Daidzein** | **Genistein** |
| µg/g | 2.6 | 1.2 | <0.1 | <0.1 |
| nanomoles/g | 6.2 | 2.8 | <0.2 | <0.2 |

As the data from Examples II and III indicate, the process according to this invention provides an effective and economical means for the isolation and concentration of isoflavone compounds.

### EXAMPLE IV : Nutritional Product Using Low Isoflavone Soy Protein

The soy protein produced in Example I was used to produce an infant formula. A control product and the infant formula according to this invention were then analyzed for isoflavone content. The procedure used to produce the experimental and control products was that described in U.S. Patent 5,021,245 to Borschel et al. except that the fiber was omitted.

Typically, plant protein based infant formulas contain 1.5 to 2.0 wt % protein as fed (ready-to-feed or "RTF"). A preferred embodiment is 1.6 to 1.8 wt % protein as fed. Thus, as described below, an infant formula made with a plant protein treated in accordance with this invention will generally have an isoflavone content of less than 600 µg/liter of formula. (30 µg of isoflavone per gm of protein x 20 gms protein per liter of formula (RTF) = 600 µg of isoflavone per liter of RTF formula).

An HPLC (high pressure liquid chromatography) method, as described below, was used to quantitate the major soy isoflavones (genistin, daidzin, genistein and daidzein) using a method adapted from the following three (3) articles, whose teachings are known in the art.
1) Setchell, KDR and Welch, MB
   J. Chrom.
   386 (1987) 315-323
2) Wang, G., Kuian, SS, Francis, OJ, Ware, GM, and Corman, AS
   J. Agric. Food Chem.
   38 (1990) 185-190
3) Barnes, S., Kirk M., and Coward, L.
   J. Agric. Food. Chem.
   42 (1994) 2466-2474

Samples of the ready-to-feed experimental and control infant formula were obtained and 20 ml of each was weighed into a tared 250 ml round bottom flask. 80 ml of ethyl alcohol was then added and the mixture was stirred. A condenser was attached to the flask and the samples were refluxed at 80°C for 2 hours. The mixtures were then cooled to room temperature and quantitatively transferred to a 100 ml volumetric flask. The precipitate and the flask were rinsed with 15 ml of 80% alcohol (v/v). The volumetric flasks were brought to volume with 80% alcohol and the samples were then mixed well. The samples were filtered through Whatman™ No. 41 paper and then 15 ml of each filtrate was placed into a graduated conical 15 ml stoppered glass test tube. Each tube was placed in a warm water bath and a stream of nitrogen was used to evaporate each sample to 3 ml. The tubes were then cooled to room temperature and 1 ml of methanol was added to each tube and then diluted to 10 ml with water and mixed well. 1.5 ml of each sample was then filtered through a 0.45 µm polypropylene membrane into an HPLC autosampler vial. Test analysis for isoflavones using reverse phase HPLC was conducted with the HPLC system as follows:

| | |
|---|---|
| Column | Vydac™ C18 Pharmaceutical; 250 x 4.6 mm; 5µm |
| Detection | UV absorbance at 254/280 nm |
| Injection | 50 mcL |
| Temperature | ambient |
| Flow Rate | 0.8 ml/min |
| Run Time | 120 minutes |
| Eluant A | 950 volumes water; 50 volumes CH₃CN; 1 volume trifloroacetic acid (TFA) |
| Eluant B | 400 volumes water; 600 volumes CH₃CN; 1 volume TFA |

| Gradient Program: | | | | | | |
|---|---|---|---|---|---|---|
| Time (minutes) | 0 | 5 | 95 | 100 | 102 | 120 |
| % Eluant B | 0 | 0 | 60 | 100 | 100 | 0 |

The results, set forth in Table IV, indicate that the process of the invention can be used to produce a nutritional product that has greatly reduced levels of isoflavones.

**TABLE IV**

| Soy Isoflavones | Control µg/g | Experimental µg/g* |
|---|---|---|
| Daidzin | 11.6 | <1.0 |
| Daidzein | 1.0 | <1.0 |
| Genistin | 19.4 | <1.0 |
| Genistein | 2.2 | <1.0 |
| TOTAL | 34.2 | <1.0 N/A |

| | | |
|---|---|---|
| * at detection limit. | | |

### EXAMPLE V : Tolerance Study

At the time of filing this application, a clinical study of the physiological effects of plant estrogens or isoflavones in infant formula made in accordance withthis invention was underway. Prior to this extensive study, a smaller tolerance study was conducted to assess overall tolerance of reduced isoflavone soy formulas in healthy, term infants.

The tolerance study was a randomized, double-masked, 3 week study using 145 healthy infants 2 to 5 weeks of age. Infants were fed a standard milk-based formula for a 1 week baseline period and then fed for 2 weeks a standard soy formula, a low phytate soy isolate based formula with isoflavones, a hydrolyzed soy isolate based formula with reduced phytate and isoflavones or a formula using the protein produced in Example I. The primary outcome variables were stool characteristics, formula intake and incidence of spit up and vomiting. Secondary variables were weight gain and parental responses to a feeding tolerance questionnaire.

Formula intake and incidence of spit up and vomit did not differ among the groups at baseline or during the study period. Mean stool rank consistency was softer for infants fed the hydrolyzed formula compared to the other experimentals. Parents associated watery and more frequent stools with the hydrolyzed formula. Infants fed the formula using the protein produced in Example I evidenced less constipation than at baseline. Mean weight gains were similar for all study groups. The conclusion of this study was that removal of phytate and/or isoflavones from the soy based formula had minimal impact on tolerance.

### Industrial Applicability

The process disclosed in this invention is a very effective, inexpensive and reliable process for the commercial removal of isoflavones, manganese and nucleotides from plant proteins. The process produces a plant protein product that has highly desirable characteristics such as isoflavone content of less than 30 µg/g protein, less than 450 µg manganese per gm of protein and less than 10 mg nucleotides per gm of protein. The protein resulting from treatment with the process described herein also has better flavor (less beany taste), improved color (lighter) and improved functionality (i.e., ability to form a stable emulsion). Moreover, the isoflavones recovered from the regeneration/alcohol release process after contact with the resin are valuable as potential anticancer compounds.

Commercial scale use of the process of this invention is enhanced when the protein slurry is pre-filtered and homogenized prior to contact with the resin bed. Macroporous resins in the bicarbonate form are most preferably used.

As a result of the present inventor's advancement to the state of the art, the nutritional industry will now be able to economically produce products containing reduced levels of isoflavones, manganese and nucleotides. Lastly, humans and animals consuming products produced according to this invention will benefit from the avoidance of certain noxious elements contained in plant proteins.

While certain representative embodiments and details have been presented for the purpose of illustrating the invention, it will be apparent to those skilled in the art that various changes and modifications may be made therein without departing from the scope of the invention, as set forth in the appended claims.

## Claims

1. A process for treating a plant protein comprising:
a) providing a slurry of plant protein that contains isoflavones, manganese or nucleotides;
b) providing at least one anion exchange resin capable of binding isoflavones, manganese or nucleotides present in said protein slurry;
c) contacting said slurry with said anion exchange resin; and
d) separating said slurry from said anion exchange resin whereby said plant protein slurry has a reduced content of isoflavones, manganese or nucleotides.

2. A process according to claim 1 further comprising the steps of exposing the resin prior to the contacting of step c) to an agent that places on the resin an exchangeable anion that:
i) does not change the pH of contacted protein slurry outside the range of 6.0 to 9.5; and
ii) does not add an objectionable anion to the contacted protein slurry at step d).

3. The process according to claim 1 wherein providing at least one anion exchange resin comprises providing an anion exchange resin which contains strong base sites and weak base sites, and which has been subjected to the steps of:
i) conversion to a hydroxide form;
ii) conversion to a chloride or sulfate form; and
iii) conversion of at least some of said strong base sites to the carbonate form and at least some of said weak base sites to the free base form.

4. A process according to one of claims 1 to 3 further comprising the steps of:
e) after step d), contacting said anion exchange resin with at least one isoflavone release agent; and
f) separating the isoflavone release agent containing isoflavones from said anion exchange resin and collecting said isoflavones.

5. A process according to one of claims 1 to 3 further comprising the steps of:
e) after the completion of step d), reconditioning the resin by:
i) exposing the resin to an agent which strips the surface of the resin of residue and converts the resin to a hydroxide form;
ii) thereafter exposing the resin to an agent which coverts the resin to either a chloride form or a sulfate form; and
iii) thereafter exposing the resin to an agent which converts at least some of the resin to a carbonate form;
f) bringing additional plant protein slurry into contact with said reconditioned resin; and
g) separating the additional slurry from the resin.

6. A process according to any one of claims 1 to 5 which additionally comprises homogenization of the slurry of plant protein prior to contacting said slurry with said anion exchange resin.

7. The process according to any one of claims 1 to 5 which additionally comprises an ultra high temperature short time treatment prior to contacting said slurry with said anion exchange resin.

8. A process according to any one of claims 1 to 7 wherein step c) comprises placing the anion exchange resin in the slurry.

9. A process according to any one of claims 1 to 7 wherein steps c) and d) comprise passing the slurry through a structure which contains the anion exchange resin and has at least one inlet and one outlet.

10. A process according to claim 9 wherein the structure is a vertical column and wherein the slurry enters said vertical column via said inlet and exists said volume via said outlet, with the inlet being located lower than the outlet.

11. A process according to one of claims 3 to 10 wherein said anion exchange resin is a macroporous resin and the carbonate is bicarbonate.

12. The process according to claim 4 wherein the isoflavone release agent is selected from aqueous solutions of acids, aqueous solutions of bases, alcohols, alcohol/water mixtures, organic solvents and mixtures thereof.

13. The process according to claim 12 wherein said isoflavone release agent is an alcohol or an admixture of alcohol and water.

14. A process according to claim 3 or 5 wherein the agent employed in step i) is selected from sodium hydroxide and potassium hydroxide and wherein the agent employed in step ii) is selected from hydrochloric acid, sulfuric acid and sodium chloride; and wherein the agent employed in step iii) is selected from sodium carbonate, sodium bicarbonate and ammonium hydroxide.

15. The process according to any one of claims 1-14 wherein said plant protein is soy.

16. A soy protein composition wherein said protein is not denatured **characterized by** having an isoflavone content of less than 30 micrograms of isoflavones per gram of protein.

17. The soy protein composition according to claim 16 having a manganese content of less than 450 micrograms per gram of protein.

18. The soy protein composition according to claim 16 having a nucleotide content of less than 10 mg per gram of protein.

19. The soy protein composition according to claim 16 having an isoflavone content of less than 20 micrograms per gram of protein.

20. The soy protein composition according to claim 19 having a manganese content of less than 400 micrograms per gram of protein.

21. The soy protein composition according to claim 16 which is a soy protein isolate.

22. A ready-to-feed infant formula comprising:
a) from 1.5 to 2.0 wt% protein wherein said protein is soy protein, and
b) said formula has an isoflavone content of less than 600 micrograms per liter.

23. The ready-to-feed infant formula according to claim 22 having an isoflavone content of less than 200 micrograms per liter.

24. The ready-to-feed infant formula according to claim 22 having an isoflavone content of less than 100 micrograms per liter.

25. The ready-to-feed infant formula according to claim 22 wherein said soy protein is soy protein isolate.

## Patentansprüche

1. Ein Verfahren zur Behandlung eines Pflanzenproteins, das folgendes umfaßt:
a) Bereitstellen einer Aufschlämmung von Pflanzenprotein, welche Isoflavone, Mangan oder Nukleotide enthält;
b) Bereitstellen von mindestens einem Anionaustauscherharz, das in der Lage ist, Isoflavone, Mangan oder Nukleotide zu binden, die in der Proteinaufschlämmung anwesend sind;
c) In-Kontakt-bringen der Aufschlämmung mit dem Anionaustauscherharz; und
d) Abtrennen der Aufschlämmung von dem Anionaustauscherharz, wobei die Pflanzenproteinaufschlämmung einen reduzierten Gehalt an Isoflavonen, Mangan oder Nukleotiden besitzt.

2. Ein Verfahren gemäß Anspruch 1, das weiterhin die Schritte umfaßt, in welchen das Harz vor dem In-Kontakt-bringen von Schritt c) einem Mittel ausgesetzt wird, das auf dem Harz ein austauschbares Anion platziert, welches:
i) den pH-Wert der kontaktierten Proteinaufschlämmung nicht außerhalb des Bereiches von 6,0 bis 9,5 ändert; und
ii) zu der kontaktierten Proteinaufschlämmung in Schritt d) kein unerwünschtes Anion hinzufügt.

3. Das Verfahren gemäß Anspruch 1, wobei das Bereitstellen von mindestens einem Anionaustauscherharz das Bereitstellen eines Anionaustauscherharzes umfaßt, das stark basische Stellen und schwach basische Stellen enthält, und das den folgenden Schritten unterworfen wurde:
i) Umwandlung in eine Hydroxidform;
ii) Umwandlung in eine Chlorid- oder Sulfatform;
iii) Umwandlung von mindestens einigen der stark basischen Stellen in die Carbonatform und von mindestens einigen der schwach basischen Stellen in die freie Basenform.

4. Ein Verfahren gemäß irgendeinem der Ansprüche 1-3, das weiterhin folgende Schritte umfaßt:
e) nach Schritt d), In-Kontakt-bringen des Anionaustauscherharzes mit mindestens einem Isoflavon-freisetzenden Mittel; und
f) Abtrennen des Isoflavon-freisetzenden Mittels, das Isoflavone enthält, von dem Anionaustauscherharz, und Sammeln der Isoflavone.

5. Ein Verfahren gemäß irgendeinem der Ansprüche 1-3, das weiterhin folgende Schritte umfaßt:
e) nach Vollendung von Schritt d), Wiederaufbereiten des Harzes, indem
i) das Harz einem Mittel ausgesetzt wird, das die Oberfläche des Harzes von Rückständen befreit und das das Harz in eine Hydroxidform umwandelt;
ii) danach das Harz einem Mittel ausgesetzt wird, das das Harz entweder in eine Chloridform oder in eine Sulfatform umwandelt; und
iii) danach das Harz einem Mittel ausgesetzt wird, das mindestens einen Teil des Harzes in eine Carbonatform umwandelt;
f) In-Kontakt-bringen von zusätzlicher Pflanzenproteinaufschlämmung mit dem wiederaufbereiteten Harz; und
g) Abtrennen der zusätzlichen Aufschlämmung von dem Harz.

6. Ein Verfahren gemäß irgendeinem der Ansprüche 1 bis 5, das zusätzlich die Homogenisierung der Pflanzenproteinaufschlämmung vor dem In-Kontakt-bringen der Aufschlämmung mit dem Anionaustauscherharz umfaßt.

7. Das Verfahren gemäß irgendeinem der Ansprüche 1 bis 5, das zusätzlich eine Ultra-Hochtemperatur-Kurzzeitbehandlung vor dem In-Kontakt-bringen der Aufschlämmung mit dem Anionaustauscherharz umfaßt.

8. Ein Verfahren gemäß irgendeinem der Ansprüche 1 bis 7, worin Schritt c) das Platzieren des Anionaustauscherharzes in die Aufschlämmung umfaßt.

9. Ein Verfahren gemäß irgendeinem der Ansprüche 1 bis 7, worin Schritte c) und d) das Hindurchleiten der Aufschlämmung durch eine Struktur umfassen, die das Anionaustauscherharz enthält und mindestens einen Einlaß und einen Auslaß besitzt.

10. Ein Verfahren gemäß Anspruch 9, worin die Struktur eine vertikale Säule ist und worin die Aufschlämmung über den Einlaß in die vertikale Säule eintritt und das Volumen über den Auslaß hinaustritt, wobei der Einlaß niedriger angeordnet ist als der Auslaß.

11. Ein Verfahren gemäß irgendeinem der Ansprüche 3 bis 10, worin das Anionaustauscherharz ein makroporöses Harz ist und das Carbonat Bicarbonat ist.

12. Das Verfahren gemäß Anspruch 4, worin das Isoflavonfreisetzende Mittel gewählt ist aus wässerigen Lösungen von Säuren, wässerigen Lösungen von Basen, Alkoholen, Alkohol/Wasser-Mischungen, organischen Lösungsmitteln und Mischungen davon.

13. Das Verfahren gemäß Anspruch 12, worin das Isoflavonfreisetzende Mittel ein Alkohol oder eine Beimischung von Alkohol und Wasser ist.

14. Ein Verfahren gemäß Anspruch 3 oder 5, worin das Mittel, das in Schritt i) verwendet wird, gewählt ist aus Natriumhydroxid und Kaliumhydroxid, und worin das Mittel, das in Schritt ii) verwendet wird, gewählt ist aus Salzsäure, Schwefelsäure und Natriümchlorid; und worin das Mittel, das in Schritt iii) verwendet wird, gewählt ist aus Natriumcarbonat, Natriumbicarbonat und Ammoniumhydroxid.

15. Das Verfahren gemäß irgendeinem der Ansprüche 1-14, worin das Pflanzenprotein Soja ist.

16. Eine Sojaproteinzusammensetzung, worin das Protein nicht denaturiert ist, **dadurch gekennzeichnet, daß** sie einen Isoflavongehalt von weniger als 30 Mikrogramm Isoflavone pro Gramm Protein besitzt.

17. Die Sojaproteinzusammensetzung gemäß Anspruch 16, wobei sie einen Mangangehalt von weniger als 450 Mikrogramm pro Gramm Protein besitzt.

18. Die Sojaproteinzusammensetzung gemäß Anspruch 16, wobei sie einen Nukleotidgehalt von weniger als 10 mg pro Gramm Protein besitzt.

19. Die Sojaproteinzusammensetzung gemäß Anspruch 16, wobei sie einen Isoflavongehalt von weniger als 20 Mikrogramm pro Gramm Protein besitzt.

20. Die Sojaproteinzusammensetzung gemäß Anspruch 19, wobei sie einen Mangangehalt von weniger als 400 Mikrogramm pro Gramm Protein besitzt.

21. Die Sojaproteinzusammensetzung gemäß Anspruch 16, die ein Sojaproteinisolat ist.

22. Eine Fertignahrungsformulierung für Kinder, die folgendes umfaßt:
a) von 1,5 bis 2,0 Gew-% Protein, wobei das Protein Sojaprotein ist, und
b) wobei die Formulierung einen Isoflavongehalt von weniger als 600 Mikrogramm pro Liter besitzt.

23. Die Fertignahrungsformulierung gemäß Anspruch 22, die einen Isoflavongehalt von weniger als 200 Mikrogramm pro Liter besitzt.

24. Die Fertignahrungsformulierung gemäß Anspruch 22, die einen Isoflavongehalt von weniger als 100 Mikrogramm pro Liter besitzt.

25. Die Fertignahrungsformulierung gemäß Anspruch 22, worin das Sojaprotein Sojaproteinisolat ist.

## Revendications

1. Procédé pour le traitement d'une protéine de plante consistant à :
a) se procurer une suspension de protéine de plante contenant des isoflavones, du manganèse ou des nucléotides ;
b) se procurer au moins une résine échangeuse d'anions capable de fixer les isoflavones, le manganèse ou les nucléotides présents dans ladite suspension de protéine ;
c) mettre en contact la dite suspension avec ladite résine échangeuse d'anions et
d) séparer ladite suspension de ladite résine échangeuse d'anions grâce à quoi ladite suspension de protéine de plante a un taux réduit d'isoflavones, de manganèse ou de nucléotides.

2. Procédé selon la revendication 1, comprenant en outre les étapes d'exposition de la résine, avant la mise en contact de l'étape c), à un agent plaçant sur la résine un anion échangeable qui :
i) ne fait pas sortir de l'intervalle entre 6,0 et 9,5 le pH de la suspension de protéine mise en contact et
ii) n'ajoute pas, à la suspension de protéine mise en contact, d'anion susceptible de présenter un inconvénient dans l'étape d).

3. Procédé selon la revendication 1, dans lequel l'étape consistant à se procurer au moins une résine échangeuse d'anions comprend l'étape consistant à se procurer une résine échangeuse d'anions qui contient des sites basiques forts et des sites basiques faibles et qui a été soumise aux étapes de :
i) conversion en une forme hydroxyde ;
ii) conversion en une forme chlorure ou sulfate et
iii) conversion d'au moins certains desdits sites basiques forts en forme carbonate et d'au moins certains desdits sites basiques faibles en forme base libre.

4. Procédé selon l'une des revendications 1 à 3, comprenant en outre les étapes consistant à :
e) après l'étape d), mettre en contact ladite résine échangeuse d'anions avec au moins un agent libérant les isoflavones et
f) séparer l'agent libérant les isoflavones contenant les isoflavones de ladite résine échangeuse d'anions et recueillir lesdites isoflavones.

5. Procédé selon l'une des revendications 1 à 3, comprenant en outre les étapes consistant à :
e) après la fin de l'étape d), reconditionner la résine par :
i) exposition de la résine à un agent qui débarrasse la surface de la résine du résidu et convertit la résine en une forme hydroxyde ;
ii) ensuite exposition de la résine à un agent qui convertit la résine en une forme chlorure ou une forme sulfate et
iii) ensuite exposition de la résine à un agent qui convertit au moins une partie de la résine en une forme carbonate ;
f) mettre en contact une quantité supplémentaire de suspension de protéine de plante avec ladite résine reconditionnée et
g) séparer la suspension supplémentaire de la résine.

6. Procédé selon l'une quelconque des revendications 1 à 5, qui comprend en outre l'homogénéisation de la suspension de protéine de plante avant la mise en contact de ladite suspension avec ladite résine échangeuse d'anions.

7. Procédé selon l'une quelconque des revendications 1 à 5, qui comprend en outre un traitement de courte durée à une température ultra élevée avant la mise en contact de ladite suspension avec ladite résine échangeuse d'anions.

8. Procédé selon l'une quelconque des revendications 1 à 7, dans lequel l'étape c) comprend l'introduction de la résine échangeuse d'anions dans la suspension.

9. Procédé selon l'une quelconque des revendications 1 à 7, dans lequel les étapes c) et d) comprennent le passage de la suspension dans une structure qui contient la résine échangeuse d'anions et a au moins une entrée et une sortie.

10. Procédé selon la revendication 9, dans lequel la structure est une colonne verticale et dans lequel la suspension pénètre dans ladite colonne verticale par ladite entrée et sort dudit volume par ladite sortie, l'entrée étant située plus bas que la sortie.

11. Procédé selon l'une des revendications 3 à 10, dans lequel ladite résine échangeuse d'anions est une résine macroporeuse et le carbonate est du bicarbonate.

12. Procédé selon la revendication 4, dans lequel l'agent libérant les isoflavones est choisi parmi les solutions aqueuses d'acides, les solutions aqueuses de bases, les alcools, les mélanges alcool/eau, les solvants organiques et leurs mélanges.

13. Procédé selon la revendication 12, dans lequel ledit agent libérant les isoflavones est un alcool ou un mélange d'alcool et d'eau.

14. Procédé selon la revendication 3 ou 5, dans lequel l'agent utilisé dans l'étape i) est choisi parmi l'hydroxyde de sodium et l'hydroxyde de potassium et l'agent utilisé dans l'étape ii) est choisi parmi l'acide chlorhydrique, l'acide sulfurique et le chlorure de sodium ; et dans lequel l'agent utilisé dans l'étape iii) est choisi parmi le carbonate de sodium, le bicarbonate de sodium et l'hydroxyde d'ammonium.

15. Procédé selon l'une quelconque des revendications 1 à 14, dans lequel ladite protéine de plante est celle de soja.

16. Composition de protéine de soja dans laquelle ladite protéine n'est pas dénaturée, **caractérisée en ce que** le taux d'isoflavones est inférieur à 30 microgrammes d'isoflavones par gramme de protéine.

17. Composition de protéine de soja selon la revendication 16 ayant un taux de manganèse inférieur à 450 microgrammes par gramme de protéine.

18. Composition de protéine de soja selon la revendication 16 ayant un taux de nucléotides inférieur à 10 mg par gramme de protéine.

19. Composition de protéine de soja selon la revendication 16 ayant un taux d'isoflavones inférieur à 20 microgrammes par gramme de protéine.

20. Composition de protéine de soja selon la revendication 19 ayant un taux de manganèse inférieur à 400 microgrammes par gramme de protéine.

21. Composition de protéine de soja selon la revendication 16, qui est un isolat de protéine de soja.

22. Aliment prêt à l'emploi pour nourrisson comprenant :
a) 1,5 à 2,0 % en masse de protéine, ladite protéine étant une protéine de soja et
b) ledit aliment ayant un taux d'isoflavones inférieur à 600 microgrammes par litre.

23. Aliment prêt à l'emploi pour nourrisson selon la revendication 22 ayant un taux d'isoflavones inférieur à 200 microgrammes par litre.

24. Aliment prêt à l'emploi pour nourrisson selon la revendication 22 ayant un taux d'isoflavones inférieur à 100 microgrammes par litre.

25. Aliment prêt à l'emploi pour nourrisson selon la revendication 22, dans lequel ladite protéine de soja est un isolat de protéine de soja.
